(19) **Europäisches Patentamt / European Patent Office / Office européen des brevets**

(11) **EP 2 351 810 A1**

(12) **EUROPEAN PATENT APPLICATION**
published in accordance with Art. 153(4) EPC

(43) Date of publication:
**03.08.2011 Bulletin 2011/31**

(51) Int Cl.:
*C10B 3/02* (2006.01)  *C10B 49/04* (2006.01)
*F23N 5/02* (2006.01)

(21) Application number: **08878015.0**

(22) Date of filing: **17.11.2008**

(86) International application number:
**PCT/RU2008/000708**

(87) International publication number:
**WO 2010/053399 (14.05.2010 Gazette 2010/19)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **06.11.2008 RU 2008143627**

(71) Applicant: **Zakrytoe Aktsionernoe Obschestvo "Karbonika-F"**
**Moscow 109316 (RU)**

(72) Inventors:
- **STROYAKOVSKY, Valentin Meerovich**
  **Moscow 119146 (RU)**
- **GUMILEVSKY, Alexei Sergeevich**
  **Moscow 117465 (RU)**
- **MOROZOV, Alexei Borisovich**
  **Krasnoyarsk 660049 (RU)**

(74) Representative: **HOFFMANN EITLE**
**Patent- und Rechtsanwälte**
**Arabellastraße 4**
**81925 München (DE)**

(54) **METHOD FOR PROCESSING COAL AND APPARATUS FOR THE IMPLEMENTATION THEREOF**

(57) The invention relates to the art of coal processing and is useful in power engineering and chemical industry for manufacturing coal adsorbents, metallurgical semicoke, and a generator or process gas. A method is proposed for coal processing, this method comprising firing of coal inside an air-tight chamber, measuring temperature inside the chamber along the height thereof, removing gas at the top of the chamber, and supplying a gasifying agent from the bottom upward. The coal processing is carried out while maintaining optimized values of the temperature difference between the burning coal bed and the gas at the outlet thereof from the chamber. An apparatus for carrying out this method consists of chamber 1 and contains gas-temperature and coal temperature sensors 6, these sensors, which are electrically connected to air-flow controller 11 via control unit 12 providing an option of automatic air-supply control depending on the difference between the maximal burning coal bed temperature and the outlet gas temperature. Use of the coal processing method and the apparatus for the implementation thereof provides an enhancement of the process productivity without deteriorating the parameters or composition of processing products.

**EP 2 351 810 A1**

**Description**

The invention relates to the art of coal processing and is useful in power engineering and chemical industry for manufacturing coal adsorbents, metallurgical semicoke, and a generator or process gas.

Known is a coal processing method, referred to as the Wellman-Galusha process, and an apparatus for carrying out this process via heat treatment of coal in an vertical autothermal shaft bed apparatus wherein a gasifying agent is supplied from below upward through a fire coal bed.

See Kohlenvergasund. Bestehende Verfahren und neue Entwicklungen. H.-D. Schilling, B. Bonn, and U. Krausß. Verlag Clückout, GmbH, Essen, 1981, translated by S.R. Islamov under the title "Gazifikatsiya Uglya," G.-D. Shilling, B. Born, and U. Kraus, Moscow: Nedra, 1986, p. 49.

This process involves the steps of charging a shaft apparatus with the feedstock lump coal and creating a firing bed having a temperature in the range from 800 to 1000°C, while simultaneously pumping air through the firing bed and removing a flue gas from above the firing bed level and removing a solid residue from below the firing bed level. Depending on process parameters, either a generator gas or a process gas may be obtained at the outlet from the apparatus and the solid residue represents either carbon adsorbents or metallurgical semicoke.

An apparatus adapted for carrying out the above-described method represents a closed heat-insulated vertical chamber equipped with an outlet for removing gas from the upper portion of the apparatus, a discharge hole, and an inlet for supplying air to the apparatus in the lower portion of the apparatus.

This method and this apparatus make it possible to process solid carbonaceous materials with a sufficiently simple hardware implementation of the process.

A drawback of this process and this apparatus is the low quality of the products. The resulting gas is saturated with coal pyrolysis products because of a nonuniform air distribution over the cross-sectional area of the apparatus, thereby limiting the use thereof, and the quality of the solid products is reduced because of the great combustion loss of the carbonaceous feedstock material.

The aforementioned drawback is overcome in another prior-art process and an apparatus for the implementation thereof.

A method is known for coal processing and an apparatus for the implementation thereof via the heat treatment of coal in an vertical autothermal bed shaft apparatus made as a hollow cylinder developing to a truncated cone for supplying a gasifying agent through the burning coal bed (EA 008111 B1, IPC C10B 47/04, 2005).

This process and this apparatus in their technical essence and the result to be achieved constitute the closest art for the present invention and were taken as such.

The prior-art method for coal processing includes fractionating and charging coal into a hollow vertical chamber made in the form of a cylinder developing to a truncated cone, firing a coal bed, measuring temperature in the chamber along the height thereof, removing the gas from a level above the burning coal bed level, and supplying a gasifying agent from the side of the smaller base of the truncated cone.

The prior-art apparatus for carrying out the method for coal processing contains a hollow vertical chamber that consists of: an upper cylinder-shaped part and a lower part shaped as a truncated cone, an outlet for removing the gas mounted at the top of the chamber, an inlet for supplying a gasifying agent to the chamber from the lower end of the cone-shaped part of the chamber, a gasifying agent flow controller, and an automated control unit (both mounted outside the chamber), an electrothermal means for firing coal, and coal temperature sensors mounted inside the chamber.

The apparatus is made as a combination of the upper, middle, and lower sections, each section constituting one-third the height of the apparatus, providing the possibility of controlling the process via blasting. The upper section consists of a charge hole, a gas outlet, a hydraulic valve, and an electrothermal means; the middle section consists of a cylinder-shaped housing and a water jacket; and the lower one is shaped as a truncated cone and consists of a discharge means, a fire grate, a means for supplying air and/or a cooling gas, and thermoelectric sensors.

The coal processing in this apparatus is carried out as follows. After a fuel is charged, the electrothermal firing means is switched on and air is admitted after some time. Further, via receiving signals from the thermoelectric sensors, the air supply is maintained at a nominal level determined by the properties of the fuel, the cross section of the apparatus, and the end purpose of the fuel processing process. At the moment the reaction front approaches the fire grate, a signal is sent from the thermoelectric sensors to stop air supply.

The drawback of this method and this apparatus is a low process productivity.

The technical problem to be solved by the present invention is improving the process productivity via optimizing coal processing parameters and developing a new construction of an apparatus adapted for carrying out this process.

The solution of this technical problem is reached by the coal processing method comprising the steps of grading, fractionating, and charging coal into a hollow vertical chamber made in the form of a cylinder developing to a truncated cone; firing a coal bed; measuring temperature in the chamber along the height thereof; removing the gas from a level above the burning coal bed level; and supplying a gasifying agent from the side of the smaller base of the truncated cone, wherein after coal is charged into the chamber, coal processing is carried out while constantly measuring the gas temperature at the gas outlet from the chamber and maintaining, in the course of coal processing in the cylinder-shaped portion of the chamber, a difference between the maximal firing bed temperature and the gas temperature at the gas outlet from the chamber, this difference being calculated from relation:

$$\Delta T_h = T(1 - k_1)h/k_3L,$$

and in the course of coal processing in the cone-shaped portion of the chamber, maintaining a difference between the maximal firing bed temperature and the gas temperature at the gas outlet from the chamber, this difference being calculated from relation:

$$\Delta T_h = T(1 - k_2)\{L(k_4 - 2(1 - k_3)\tan\beta)/(k_4L - 2(h - k_3L)\tan\beta)\}^2 h/L,$$

where: T°C is the maximal firing bed temperature, L is the distance between the levels of the gasifying agent inlet into the chamber and the gas outlet from the chamber; h is the distance between the level of the maximal firing bed temperature and the level of the gas outlet of the chamber; $\beta=30°-35°$ is one-half the angle of the truncated cone; $k_1 = 0,25-0,35$; $k_2 = 0,05-0,15$; $k_3 = 0,7-0,8$; and $k_4 = 0,4-0,6$.

The solution of the technical problem is also achieved by the apparatus adapted for carrying out the coal processing method, this apparatus comprising a hollow vertical chamber that consists of an upper cylinder-shaped part and a lower part shaped as a truncated cone, an outlet for removing a gas mounted at the top of the chamber, an inlet for supplying a gasifying agent to the chamber from the lower end of the cone-shaped part of the chamber, a gasifying agent flow controller and an automated control unit (both mounted outside the chamber), an electrothermal means for firing coal and coal temperature sensors mounted inside the chamber, wherein the chamber further contains a gas temperature sensor mounted at the gas outlet level and coal temperature sensors are mounted inside the chamber along the height thereof at fixed distances from the gas temperature sensor down to the lower end of the cone-shape part of the chamber, and all temperature sensors are electrically connected to the control unit, with an option of automatically controlling the air supply depending on the difference between the sensor-recorded values of the maximal firing bed temperature and the outlet gas temperature, wherein the cone-shaped part of the chamber has the angle of the cone in the range of 60°-70° and the ratio of the height of the cylinder-shaped part to the full height of the chamber is in the range of 0,7 to 0,8 and the ratio of the diameter of the cylinder-shaped part to the full height of the chamber is in the range of 0,4 to 0,6.

It is desirable to carry out the process while maintaining the maximal firing bed temperature in the range of 650°C to 1100°C.

In order for the process to yield metallurgical semicoke, use of non-caking coals of 3-50 mm grades is preferred; to obtain carbon adsorbents, coals of 5-15 mm grade are preferred; and to obtain the process gas, coals of 3-30 mm grade are preferred.

It is expedient to fire coal from the upper end of the cone-shaped part of the chamber.

Coal firing from the lower end of the cone-shaped part of the chamber is also possible.

A desired gasifying agent is atmospheric air.

A preferred gasifying agent is a mix of atmospheric air with steam.

An enhancement of the productivity of coal processing by the present process and apparatus is made possible by a more uniform distribution of air supplied to the chamber through a nozzle shaped as a truncated cone with an optimized range of the angles of the cone, and by the optimization of the coal processing parameters and working chamber parameters in the cylinder-shaped part and cone-shaped part thereof depending on the physical characteristics of the feedstock material and the requirements to the end processing product.

Coal processing occurs inside a closed hollow chamber having a height of L and consisting of a cylinder-shaped part having a diameter of D and height of H that develops to a nozzle shaped as a truncated cone with an angle of the cone of α.

In real conditions, non-steady-state heat and mass transfer processes occur inside the chamber as the burning coal bed is moving in counter-flow to the gasifying agent simultaneously with the occurrence of exothermal and endothermal reactions. According to the practice of heat-transfer calculations for such the processes, the following assumptions should be made:

- the passage of a gas through a solid medium occurs in the full heat recuperation mode: in the burning bed, the gas is heated to a temperature of T and leaves the chamber at a temperature of $T_h$;

- heat transfer occurs between "a hot surface" which lies at the level of the burning coal bed having a temperature of T and "a cold surface" which lies at the level of the gas outlet from the chamber having a temperature of $T_h$, the distance between these surfaces being h;
- as the burning coal bed is moving to the truncated cone-shaped part of the chamber, heat transfer occurs between the cold surface and the hot surface having equal average areas.

See Tsvetkov, F.F., and Grigoriev, B.A., Teplomassoobmen (Heat and Mass Transfer): A Manual, 2nd edition, Moscow: MEI Publishing House, 2006; p. 530.

With the aforementioned assumptions, the process occurring inside the chamber may be represented as a series of steady-state thermal processes where the value of h increases from 0 to L.

According to the Fourier equation for a stationary heat flow from one surface to another, the heat loss power is $P = S\lambda\Delta T/h$, where: S is the heat-exchange surface area, h is the current value of the distance between the hot surface and cold surface, $\lambda$ is the heat conductivity coefficient, and $\Delta T = T - T_h$ is the temperature difference between the hot surface and cold surface.

When h=H, then $T_H = k_1 T$, where $k_1$ is the gas cooling coefficient in the cylinder-shaped part of the chamber.

When h=L, then $T_L = k_2 T$, where $k_2$ is the gas cooling coefficient in the chamber.

As the burning coal bed is moving inside the cylinder-shaped part of the chamber, the roasting volume over the burning coal bed may be represented as a cylinder having a height of h and a base surface area of S. The height h will increase as the burning coal bed sinks.

The complete temperature difference between the face having the firing coal temperature and the upper face (having the output flue gas temperature) in a cylinder having a height of H is calculated from $\Delta T = HP/S\lambda$, and the temperature difference in some arbitrary cylinder of this chamber having a height of h is calculated from $\Delta T_h = hP/S\lambda$. From this, $\Delta T_h/\Delta T = h/H$ or

$$\Delta T_h = T(1 - k_1)h/H.$$

As the burning coal bed is moving inside the cone-shaped part of the chamber, the roasting volume over the burning coal bed may be represented as a truncated cone having a height of h, the surface area of the larger end of S, and the surface area of the smaller end of s. According to the aforementioned assumptions, as the "hot surface" is moving downward, the value of h will increases, with decreasing average heat-exchange surface area $S_h = (S+s)/2$.

The height of the cone-shaped part of the chamber is $L - H = (D - d_L)/2\tan\beta$, where $\beta = \alpha/2$ and $d_L$ is the diameter of the smaller end of the cone-shaped part of the chamber.

Therefore, $d_L = D - 2(L - H)\tan\beta$ and, as a particular case of this equality, $d_h = D - 2(h - H)\tan\beta$, where $d_h$ is the diameter of the cone-shaped part of the chamber at a height of h.

The complete temperature difference over the chamber of height L is calculated from $\Delta T_L = LP/\lambda S_L$, and the temperature difference between the cold surface and the hot surface, which is in the cone-shaped part of the chamber at a depth of h, is calculated from $\Delta T_h = hP/\lambda S_h$.

From this, $\Delta T_h = \Delta T_L h S_{h=L}/LS_h$, $= T(1 - k_2)hS_{h=L}/LS_h$, $= T(1 - k_2)hd^2_L/Ld^2_h = T(1 - k_2)\{(D - 2(L - H)\tan\beta)/(D - 2(h - H)\tan\beta)\}^2 h/L = T(1 - k_2)\{(D - 2L(1 - k_3)\tan\beta)/(D - 2(h - k_3 L)\tan\beta)\}^2 h/L$,

$$\Delta T_h = T(1 - k_2)\{L(k_4 - 2(1 - k_3)\tan\beta)/(k_4 L - 2(h - k_3 L)\tan\beta)\}^2 h/L,$$

where $H = k_3 L$ and $D = k_4 L$.

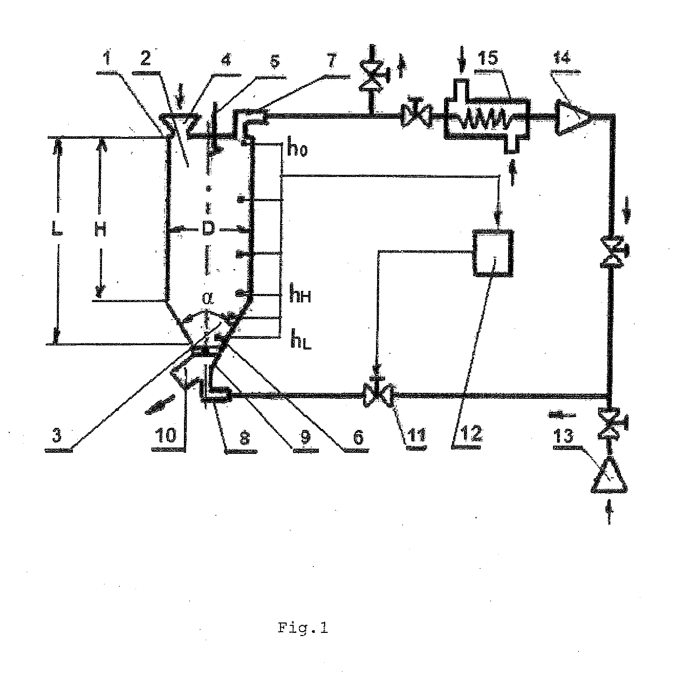

Figure 1 represents a scheme of the apparatus for coal processing.

The apparatus comprises a vertical working chamber 1 of height L shaped as a cylinder 2 which develops to a truncated cone 3 with a cone angle $\alpha$; charge hole 4; an electrothermal, means 5; temperature sensors 6, one for measuring the leaving gas temperature and mounted inside the chamber near a gas outlet 7 and the others for measuring the coal temperature at fixed distances h from this sensor; an inlet 8 for supplying air to the chamber; a fire grate 9; a discharge means 10; an air flow controller 11; a control unit 12, which is electrically connected to the temperature sensors and the air flow controller; a pump 13 for supplying a gasifying agent; a pump 14 for gas transfer; and a heat exchanger 15.

The apparatus operates in the following manner.

The feedstock material prepared for processing through the hole 4 is charged into the chamber 1, where it gradually fills first the cone-shaped part 3 and then the cylinder 2, followed by pressurizing of the chamber. The coal bed is fired by the electrothermal means 5. Through the inlet 8 and the fire grate 9, the gasifying agent is fed to the chamber by means of the pump 13. Simultaneously, the temperature inside the chamber is measured by means of sensors 6. The signal from the sensors is sent to the control unit 12. Once the signal is received that the required maximal temperature of T has been achieved in the upper bed, the electrothermal means is switched off, and the process is continued while the control unit maintains, at each level h where sensors are mounted in the chamber, a fixed temperature difference of $\Delta T_h$ between the sensor-detected values of the maximal temperature of the burning coal bed and the outlet gas temperature.

As the firing front is moving downward, the value of h increases. In order for optimal characteristics of the process to be obtained, once the firing front reaches the low plane of the cylinder, the automatic control unit should provide the outlet gas temperature of $T_H = k_1 T$, and once the firing front reaches the fire grate, the outlet gas temperature should be $T_L = K_2 T$, where $k_1$ and $k_2$ are experimentally determined coefficients. For this purpose, the control unit is programmed so as to maintain the relationship between $\Delta T_h$ and h at each level inside the cylinder-shaped part of the chamber as follows: $\Delta T_h = T(1 - k_1)h/k_3 L$. Once a signal is received from the temperature sensors that the firing front has entered the cone-shaped part of the chamber, $\Delta T_h$ is described as a function of h as $\Delta T_h = T(1 - k_2)\{L(k_4 - 2(1 - k_3) \tan \beta)/(k_4 L - 2(h - k_3 L)\tan \beta)\}^2 h/L$, where $k_3 = H/L$ and $k_4 = D/L$ are experimentally determined relationships between the geometric parameters of the chamber.

Once a signal is received from the lower temperature sensor that the firing front has reached the fire grate, air supply is automatically stopped. After the working regime is over, the apparatus is entered the cooling regime to reduce the residual temperature of the solid product. The cooling system includes a set of stop valves, the water-cooled heat-exchanger 15, and the pump 14 to transfer the gas to circulate over a closed loop where it is consecutively heated while passing through the product layer and then cooled in the heat-exchanger to the temperature of the cooling water. After the cooling is over, the product is discharged by gravity through the discharge means 10.

A variation of the chamber is possible where the electrothermal means 5 is mounted underneath, which does not change the control unit program.

The method uses coals of various ranks from various coal fields, namely, rank B2 coal (from Berezovski mine of the Kansk-Achinsk coal basin) having the following parameters: water content of $W_t^r = 33,5\%$; ash content of $A^d = 5,0\%$; volatiles yield of $V^{daf} = 48\%$, $C^{daf} = 71,7\%$, $H^{daf} = 4,9\%$, $N^{daf} = 0,8\%$, $O^{daf} = 22,3\%$, $S^{daf} = 0,5\%$; calorific value of $Q_i^r = 3800$ kcal/kg; rank D coal (from the Shubarkolski coal section, Kazakhstan) having the following parameters: $W_t^r = 12,2\%$, $A^d = 2,4\%$, $V^{daf} = 40\%$, $C^{daf} = 77,9\%$, $H^{daf} = 5,3\%$, $N^{daf} = 1,2\%$, $O^{daf} = 15\%$, $S^{daf} = 0,44\%$, $Q_i^r = 2570$ kcal/g; and rank B2 coal (from Borodinski mine) having the following parameters: $W_t^r = 31,3\%$, $A^d = 10,3\%$, $V^{daf} = 47/6\%$, $C^{daf} = 71\%$, $H^{daf} = 5\%$, $N^{daf} = 1\%$, $O^{daf} = 22,5\%$, $S^{daf} = 0,5\%$, $Q_i^r = 3760$ kcal/g.

The method uses a series of apparatuses having the working chamber of height L, various inner diameters D of the cylinder-shaped part of the chamber, and various cone-shaped parts of the chamber of height H with the cone angle of $\alpha$, whose parameters are listed in Table 1.

The invention will be further illustrated by examples.

The parameters of the method and apparatus according to the examples are displayed in Table 1.

Table 1

| Parameter | Example 1 | Example 2 | Example 3 | Example 4 | Example 5 |
|---|---|---|---|---|---|
| T°C | 650 | 900 | 1100 | 600 | 1200 |
| $k_1 = T_H/T$ | 0.25 | 0,3 | 0,35 | 0,4 | 0,2 |
| $k_2 = T_L/T$ | 0,05 | o | 0,15 | 0,2 | 0,02 |
| L, M | 1,0 | 1,0 | 1,0 | 1,0 | 1,0 |
| $k_3 = H/L$ | 0,7 | 0,75 | 0,8 | 0,85 | 0,65 |
| $k_4 = D/L$ | 0,4 | 0,5 | 0,6 | 0,7 | 0,3 |
| $\alpha$, deg | 60 | 65 | 70 | 75 | 55 |

<u>Example 1.</u> Shubarkolski coal of rank D (from Kazakhstan) is selected in grading. To obtain metallurgical semicoke as a result of processing, the feedstock material is crushed and 3-50 mm grade coal is selected upon fractionation.

Coal is charged into the chamber that has the following parameters: L = 1,0 m; $k_3 = H/L = 0,7$; $k_4 = D/L = 0,4$; and $\alpha = 60°$.

After coal is charged and the upper bed is fired, air is fed to the chamber through the fire grate. The process is carried out with T = 650°C, $k_1 = T_H/T = 0,25$, and $K_2 = T_L/T = 0,05$. The gas temperature is measured at the outlet, and the burning coal bed temperature is measured at each fixed distance h between the gas temperature sensor and the coal temperature sensor. With this, by means of the control unit of the air-flow controller, the values of the temperature

difference of $\Delta T_h$ are provided between the gas leaving the chamber and the burning coal bed at the level of h by the following relationships: $\Delta T_h = T(1 - k_1)h/k_3L$ in the cylinder-shaped part of the chamber, and $\Delta T_h = T(1 - k_2)\{L(k_4 - 2(1 - k_3)\tan\beta)/(K_4L - 2(h - k_3L)\tan\beta)\}^2h/L$ in the cone-shaped part.

After the working regime is over, the air supply to the chamber is stopped automatically; the gas is fed to circulate over a closed loop where it is consecutively heated while passing through the product bed and then cooled in the heat-exchanger. After being cooled to below 70°C, the product is discharged from the chamber. The end product has the following parameters: ash content of $A^d = 5,4\%$, structural strength of 74,8%, apparent density of 0,68 g/cm$^3$, and solid product yield of 48,6%.

Example 2. To obtain adsorbed coal as a result of the processing, rank B2 coal (from Borodinski mine) is selected upon grading. The feedstock material is crushed, and 5-15 mm grade coal is selected upon fractionation. The process is carried out as described in Example 1. The end product has the following parameters: ash content of $A^d =$ 25%, structural strength of 86%, apparent density of 0,45 g/cm$^3$, specific pore surface of 850 m$^2$/g, iodine adsorption activity (GOST (Russian State Standard) 6217-74) of 68,6%, and solid product yield of 27,4%.

Example 3. To obtain a process gas as a result of the processing, rank B2 coal (from Berezovski mine of the Kansk-Achinsk coal basin) is selected upon grading. The feedstock material is crushed, and 3-30 mm grade coal is selected upon fractionation. The first step of the process involving partial coal gasification is carried out as described in Example 1. At the step of complete coal gasification, blasting is supplemented with steam in an amount required for maintaining a temperature of 1100°C in the gasification front, and the gasification front moves toward the primary bed firing. The process is controlled by the control unit of the air-flow controller according to the relationships given in Example 1. After the process is over, slag is discharged. The gas composition is as follows (vol %): CO = 13,8; $H_2$ = 15,6; $CO_2$ = 16,0; $CH_4$ = 2,4; $N_2$ = 46,5; and $H_2O$ = 5,92. The specific heat of gas combustion is 1000-1200 kcal/nm$^3$. The carbon content of the solid residue is 1.,9%.

Example 4. To obtain metallurgical semicoke as a result of the processing, rank D Shubarkolski coal (Kazakhstan) is selected upon grading. The feedstock material is crushed, and 3-50 mm grade coal is selected upon fractionation. The process is carried out as described in Example 1.

Example 5. To obtain a process gas as a result of the processing, rank B2 coal (Berezovski mine, Kansk-Achinsk coal basin) is selected upon grading. The feedstock material is crushed, and 3-50 mm grade coal is selected upon fractionation. The process is carried out as described in Example 1.

For reference, coals having the same parameters as in Examples 1 to 5 are processed simultaneously using the prior-art method; Examples 1c to 5c are comparative examples. The process is carried out so as to obtain, as a result of processing, products having the same parameters and the same composition as in Examples 1 to 5.

The measure of the coal processing productivity is the time taken by the production of a processing product starting with the moment of switching on the electrothermal means and ending with the onset of discharging the solid residue from the chamber. The results of measurements are displayed in Table 2.

Table 2

| Example | 1 | 1c | 2 | 2c | 3 | 3c | 4 | 4c | 5 | 5c |
|---|---|---|---|---|---|---|---|---|---|---|
| Process duration, hours | 5 | 7 | 5,5 | 8 | 9 | 12 | 7,5 | 8 | 11,5 | 12 |

The data displayed in the Table 2 make it clear that, provided the optimal values of the process and apparatus parameters, the durations of the process according to Examples 1 to 3 are 25 to 30% shorter than for the prior-art methods known from Examples 1c to 3c. The durations of the processes according to Examples 4 and 5 for the values of the process and apparatus parameters higher or lower than the optimal values, are commensurate with the coal processing times by the prior-art method according to Examples 4c and 5a, respectively.

Use of the present coal processing method and the apparatus for the implementation thereof provides a 25 to 30% enhancement of the process productivity without deteriorating the parameters or composition of the processing products and allows the production, by means of the same equipment, of various processing products, namely, metallurgical coke, adsorbent coal, or process gas, thereby considerably widening the potential for industrial application of coal processing for the needs of metallurgy, chemistry, and heat and power engineering.

**Claims**

1. A method for coal processing comprising the steps of grading, fractionating, and charging coal into a hollow vertical chamber made in the form of a cylinder developing to a truncated cone; firing a coal bed; measuring temperature in the chamber along the height thereof; removing the gas from a level above the burning coal bed level; and supplying a gasifying agent from the side of the smaller base of the truncated cone, **characterized in that** after coal is charged into the chamber, coal processing is carried out while constantly measuring the gas temperature at the gas outlet from the chamber and maintaining, in the course of coal processing in the cylinder-shaped portion of the chamber, a difference between the maximal firing bed temperature and the gas temperature at the gas outlet from the chamber, this difference being calculated from relation:

$$\Delta T_h = T(1 - k_1)h/k_3L,$$

and in the course of coal processing in the cone-shaped portion of the chamber, maintaining a difference between the maximal firing bed temperature and the gas temperature at the gas outlet from the chamber, this difference being calculated from relation:

$$\Delta T_h = T(1 - k_2)\{L(k_4 - 2(1 - k_3)\tan \beta)/(k_4L - 2(h - k_3L)\tan \beta)\}^2 h/L,$$

where: T°C is the maximal firing bed temperature, L is the distance between the levels of the gasifying agent inlet into the chamber and the gas outlet from the chamber; h is the distance between the level of the maximal firing bed temperature and the level of the gas outlet of the chamber; $\beta$=30°-35° is one-half the angle of the truncated cone; $k_1$ = 0,25-0,35; $k_2$= 0,05-0,15; $k_3$ = 0,7-0,8; and $k_4$ = 0,4-0,6.

2. A method for coal processing according to claim 1, **characterized in that** the process is carried out while maintaining the maximal burning coal bed temperature in the range of 650 to 1100°C.

3. A method for coal processing according to claim 1, **characterized in that** during grading and fractionation, non-caking coals of 3-50 mm grade are selected for obtaining metallurgical semicoke, 5-15 mm grade coals are selected for obtaining carbon adsorbents, and 3-30 mm grade coals are selected for obtaining the process gas.

4. A method for coal processing according to claim 1, **characterized in that** coal is fired from the side of the upper end of the cylinder-shaped part of the chamber.

5. A method for coal processing according to claim 1, **characterized in that** coal is fired from the side of the lower end of the cylinder-shaped part of the chamber.

6. A method for coal processing according to claim 1, **characterized in that** the gasifying agent is atmospheric air.

7. A method for coal processing according to claim 1, **characterized in that** the gasifying agent is a mix of atmospheric air with steam.

8. An apparatus for carrying out the coal processing method comprising a hollow vertical chamber that consists of an upper cylinder-shaped part and a lower part shaped as a truncated cone, an outlet for removing a gas mounted at the top of the chamber, an inlet for supplying a gasifying agent to the chamber from the lower end of the cone-shaped part of the chamber, a gasifying agent flow controller and an automated control unit both mounted outside the chamber, an electrothermal means for firing coal and coal temperature sensors mounted inside the chamber, **characterized in that** the chamber further contains a gas temperature sensor mounted at the gas outlet level and coal temperature sensors are mounted inside the chamber along the height thereof at fixed distances from the gas temperature sensor down to the lower end of the cone-shape part of the chamber, all temperature sensors are electrically connected to the control unit, with an option of automatically controlling the air supply depending on the difference between the sensor-recorded values of the maximal firing bed temperature and the outlet gas temperature, wherein the cone-shaped part of the chamber has the angle of the cone in the range of 60°-70° and the ratio of the height of the cylinder-shaped part to the full height of the chamber is in the range of 0,7 to 0,8 and the ratio of the diameter of the cylinder-shaped part to the full height of the chamber is in the range of 0,4 to 0,6.

Fig.1

## INTERNATIONAL SEARCH REPORT

| | |
|---|---|
| International application No. |
| PCT/RU 2008/000708 |

**A.    CLASSIFICATION OF SUBJECT MATTER**

C10B 3/02 (2006.01); C10B 49/04 (2006.01); F23N 5/02 (2006.01)

According to International Patent Classification (IPC) or to both national classification and IPC

**B.    FIELDS SEARCHED**

Minimum documentation searched (classification system followed by classification symbols)

C10B 3/02, 49/04, 3/00, 49/00, F23N 5/02, 5/00

Documentation searched other than minimum documentation to the extent that such documents are included in the fields searched

Electronic data base consulted during the international search (name of data base and, where practicable, search terms used)

PAJ, USPTO DB, Esp@cenet,

**C.    DOCUMENTS CONSIDERED TO BE RELEVANT**

| Category* | Citation of document, with indication, where appropriate, of the relevant passages | Relevant to claim No. |
|---|---|---|
| A | EA 008111 B1 (OOO "SIBTERMO") 27.04.2007, the whole document | 1-8 |
| A | RU 2275407 C1 (ZAKRYTOE AKTSIONERNOE OBSCHESTVO "KARBONIKA-F") 27.04.2006, p. 3, lines 45-48 | 1-8 |
| A | US 4883499 A (FREDERICK P. BEIERLE et al.) 28.11.1989, col.2, lines 39-65, col. 3, lines 4-11, col. 4, lines 64-66, col. 5, line 2 | 1-8 |

☐   Further documents are listed in the continuation of Box C.          ☐          See patent family annex.

| | |
|---|---|
| * Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 02 July 2009 (02.07.2009) | 13 August 2009 (13.08.2009) |

| Name and mailing address of the ISA/ | Authorized officer |
|---|---|
| RU | |
| Facsimile No. | Telephone No. |

Form PCT/ISA/210 (second sheet) (July 1998)

9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H.-D. Schilling ; B. Bonn ; U. Krausß.** Kohlenvergasund. Bestehende Verfahren und neue Entwicklungen. Verlag Clückout, GmbH, 1981
- **G.-D. Shilling ; B. Born ; U. Kraus.** *Gazifikatsiya Uglya,* 1986, 49
- **Tsvetkov, F.F. ; Grigoriev, B.A.** Teplomassoobmen (Heat and Mass Transfer): A Manual. MEI Publishing House, 2006, 530